# EUROPEAN PATENT SPECIFICATION

(11) **EP 1 168 843 B1**
(45) Date of publication and mention of the grant of the patent: **09.11.2005**
(21) Application number: 01304957.2
(22) Date of filing: 06.06.2001
(51) Int. Cl.: H04N 7/088

(54) **Method and apparatus for accessing a text based information service**
Verfahren und Gerät für den Zugriff auf textbasierte Informationsdienste
Méthode et appareil pour accéder à un service d'information textuelle

(30) Priority: 28.06.2000 GB 0015864
(43) Date of publication of application: 02.01.2002
(60) Divisional application: 05107607.3
(73) Proprietor: Nokia Corporation, 02150 Espoo (FI)
(72) Inventor: Ivehammar, Stefan, 58933 Linköping (SE)
(74) Representative: Walaski, Jan Filip

(56) References cited:
- EP-A- 0 145 677
- EP-A- 0 757 485
- WO-A-97/39579
- WO-A-97/41690
- WO-A-98/17064
- GB-A- 2 345 814

## Description

This invention relates to the provision of text based information services, particularly but not exclusively to a method of accessing a teletext service through a television system.

The provision of text based information services, for example teletext, for viewing on a conventional television receiver, is well-known. The BBC's Ceefax™ service and ITV's Teletext™ service are examples of commercial versions of teletext services. Teletext is a data format which enables data to be transmitted within a video signal. Commonly, teletext data is encoded in unused parts of the video signal, for example in the vertical blanking interval. Teletext data can also be transmitted over a dedicated channel, if this is available, for example in a cable or satellite television system.

In a conventional television system having a teletext facility, a viewer switches between the television and teletext modes using, for example, a 'TEXT' button on a remote control unit. In the teletext mode, a viewer selects a page that he wishes to view by entering the page number on the remote control unit. Page numbers are defined in the teletext standard as a 3-digit number in the range 100 to 899, consisting of one 'magazine' digit plus two page number digits.

Increasingly, television viewers are demanding, and service or programme providers seeking to provide, additional information relating to television programmes currently being broadcast. For example, television viewers can retrieve scores, detailed results and other facts when watching sports programmes. Cooking programmes often display a page number which sets out the recipes which have been used in the programme. At present, a service provider notifies viewers that there is a teletext page with more information available, by incorporating suitable text in the standard video signal, for example, "See Teletext Page 580". In response, the viewer presses the TEXT button on his remote control unit to enter teletext mode, and enters the previously displayed three digit page number using the numeric key pad on the remote control unit. This can be inconvenient, since the viewer may forget the page number after switching to the teletext mode, or may enter an incorrect number or even be unable to enter the number easily, for example if he is watching the television programme in low light conditions. Furthermore, the viewer can also have difficulties in reading the number on the screen for the relatively brief time that it appears. Finally, and not to be underestimated, is the general propensity of television viewers to take the option that requires least effort. Faced with the option of entering four keystrokes on their remote control unit, or continuing to watch the programme, many viewers will simply ignore the additional information available to them.

WO 98/17064 describes an interactive television system in which a URL representing an Internet website is encoded in a television signal. A user may link to the website by selecting an icon displayed on their television screen.

EP 0,757,485 describes an interactive television system including a teletext multiplex broadcasting transmission device. A household interactive television receiver generates an additional information selecting screen for selecting arbitrary additional information according to a request signal received from a television remote controller.

The present invention aims to provide viewers with easier access to additional information.

According to the present invention, there is provided apparatus for accessing a text based information service from a television programme service according to claim 1.

By using an acceptance signal which is independent of the page to which the link information corresponds, and therefore breaking the one-to-one correspondence between the keystrokes entered on the display controller and the digits of a page identifier which identifies a page, the process of selecting a page of the text based information service can be made considerably simpler and more reliable. In the case of a teletext service using three digit page identifiers, the process of selecting a page can be reduced by three keystrokes, from the four keystrokes required in a conventional system to change to teletext mode from TV viewing mode and then to enter a three digit number, to the single keystroke required in accordance with the invention to accept a direct transfer to the page identified on the television screen.

Preferably, the link information is provided in a subtitle line.

The apparatus can include means for highlighting the link information, so that the availability of the information in a readily accessible way is drawn to the viewer's attention.

The apparatus can further comprise means for distinguishing link information from information which does not comprise a link to the text based information service. Preferably, this comprises means for detecting a tag associated with the link information. On detection, the link information can be displayed irrespective of the preferences set by the viewer, so that a viewer does not have to manually set the text viewing mode to obtain the benefit of the invention.

According to the invention, there is further provided a method of accessing a text based information service from a television programme service via a television receiver according to claim 16.

According to the invention, there is also provided a program to be executed by a processor to enable access to a text based information service from a television programme service according to claim 30.

Embodiments of the invention will now be described by way of example with reference to the accompanying drawings, in which:
Figure 1 is a schematic diagram of a digital television system;
Figure 2 is a schematic diagram of the digital television receiver which forms part of the digital television system shown in Figure 1;
Figure 3 is a schematic diagram of the software running in the digital television receiver shown in Figure 2;
Figure 4 is a schematic flow chart illustrating the operation of the invention; and
Figure 5 is a schematic flow chart illustrating the operation of the invention with tagged page numbers.

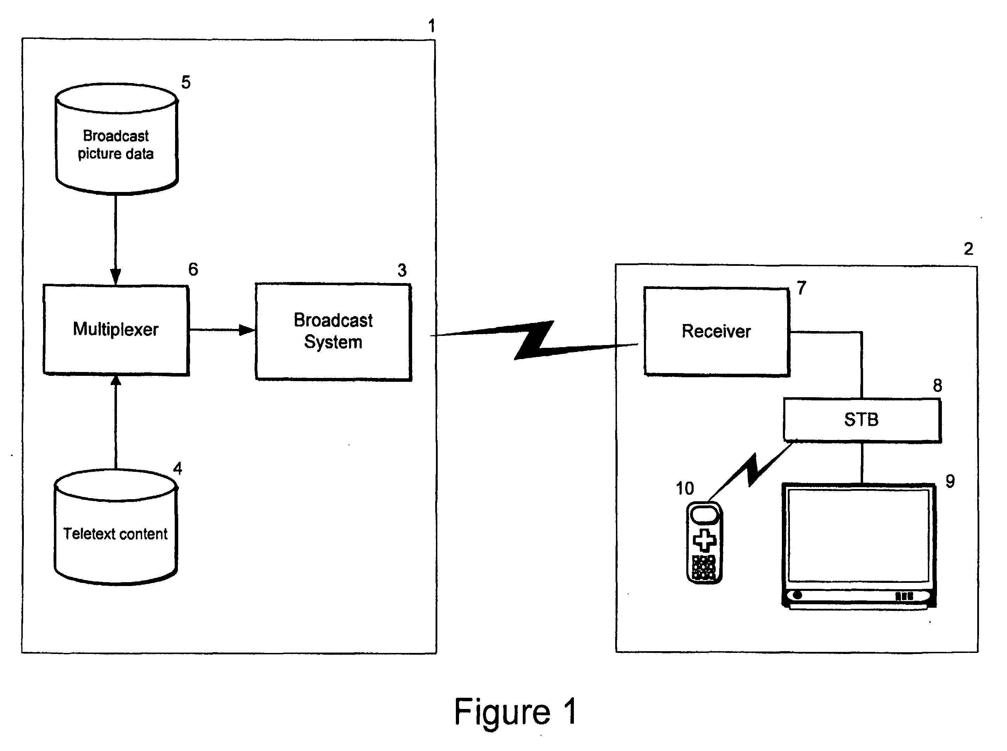

Referring to Figure 1, a digital television system with a teletext capability, for example teletext which conforms to the ITU-R System B Teletext format, also known as EBU Teletext, comprises a digital broadcast station 1 operating according to the Digital Video Broadcasting (DVB) standard and a DVB-compliant digital television receiver 2.

The broadcast station 1 provides a combined television/teletext signal, conveyed for example as MPEG-2 transport stream packets in accordance with current DVB standards, from a broadcast system 3, which is for example a terrestrial transmitter, a cable TV head-end or a satellite broadcast system. The combined signal is produced by multiplexing fixed format teletext content 4 with broadcast picture data 5 at a multiplexer 6.

The digital television receiver 2 includes a receiver 7 and a set top box (STB) 8 coupled to a television set 9. The receiver 7 can be, for example, an aerial, cable receiver or satellite dish, together with the associated electronics for receiving a television signal. The functionality provided by the set top box 8 and/or the receiver electronics can alternatively be integrated into the television set 9. The digital television receiver 2 is controlled by a remote control unit 10, also referred to herein as a display controller. The digital television receiver 2 can alternatively be any apparatus capable of receiving a television/teletext signal, for example a personal computer having a TV display card and teletext decoder.

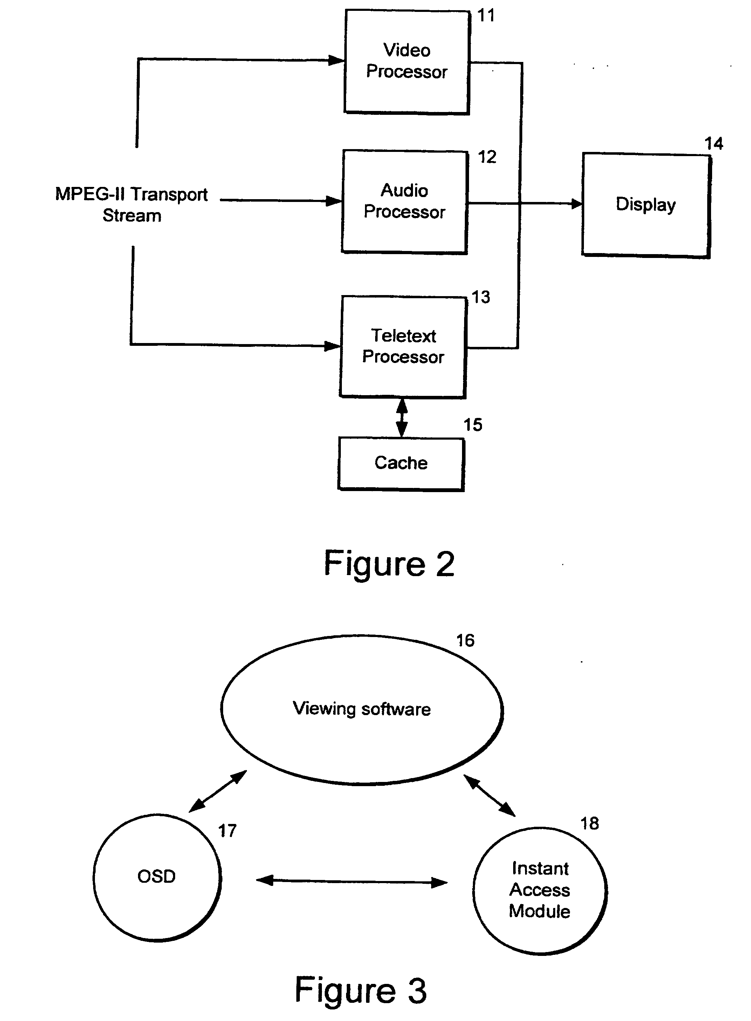

Referring to Figure 2, the set top box 8 comprises a video stream processor 11 for processing the MPEG-II transport stream from the receiver 7, an audio stream processor 12, a teletext stream processor 13 for processing the teletext packets and a display 14, for example a conventional CRT display forming part of the television 9, for displaying television images and teletext data. Cache memory 15 is provided to enable local storage of teletext pages for subsequent rapid retrieval.

Referring to Figure 3, the video stream processor 11 and teletext stream processor 13 modules are implemented in software by television viewing software 16, for example as found in a conventional DVB-compliant digital television receiver and teletext decoding and display software, referred to herein as On Screen Display (OSD) software 17, which is also found in conventional DVB-compliant digital television receivers having a teletext decoding capability.

The OSD software 17 is responsible for decoding streams of teletext packets and controlling the display of the resulting teletext pages on the display 14. For example, a user selects page number 555 on the remote control unit 10 by pressing a 'TEXT' button to enter teletext mode and then typing in the character '5' three times. This selection is received at the STB 8. In response, the OSD software 17 extracts text and graphic information corresponding to page 555 from the video stream and displays it on the display 14. If a teletext subtitle page is selected, for example page 888 in the United Kingdom, the OSD software 17 extracts the subtitle stream from the video signal and overlays it onto the video picture.

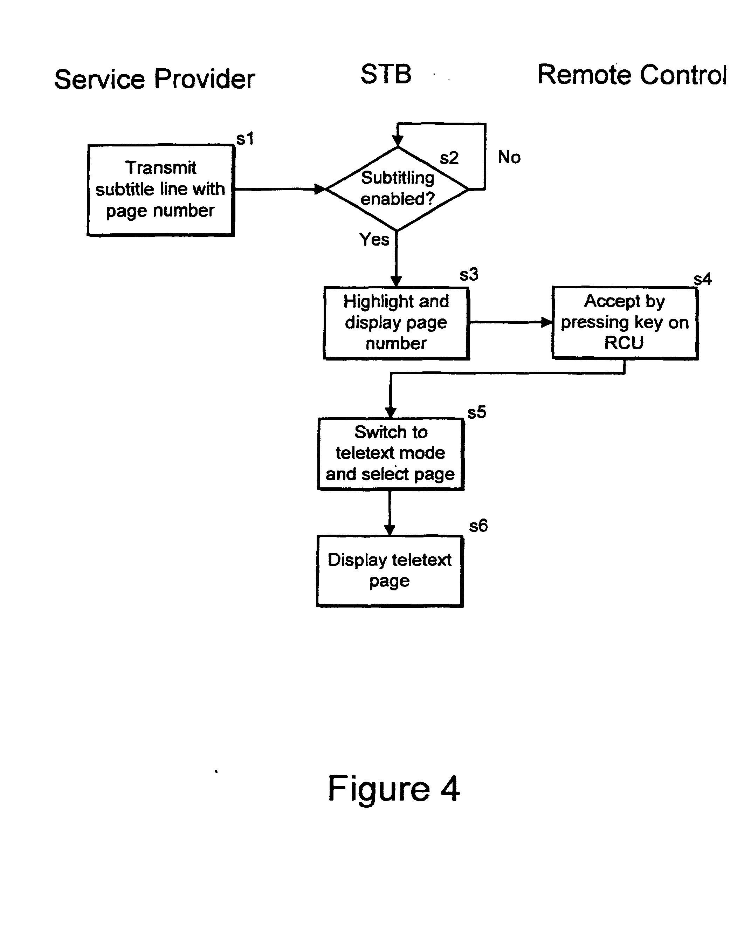

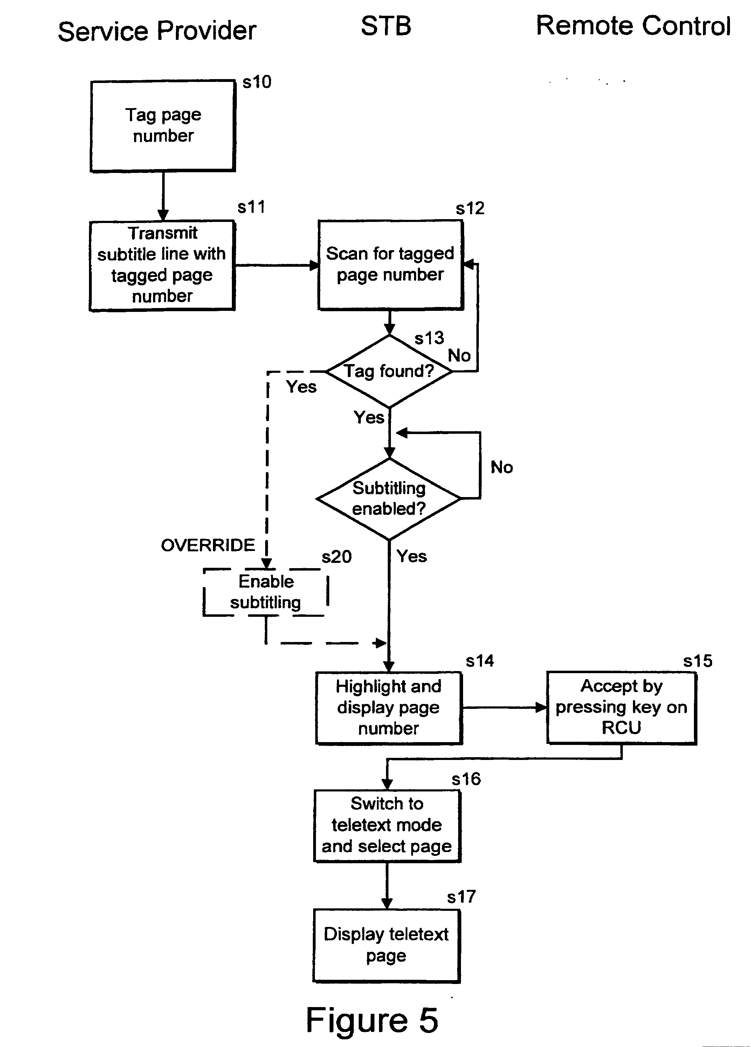

In accordance with the invention, an additional software module is provided, referred to herein as the instant access module 18, to run alongside the viewing software 16 and the OSD software 17 and to implement the functionality described below with reference to Figures 4 and 5.

Referring to Figure 4, when a service provider wishes to notify television viewers that there is additional information relating to the current television programme available on a certain teletext page, for example page number 345, the service provider transmits a teletext subtitle line to this effect, for example "Top scores on Teletext page 345" (step s1). The teletext subtitle line is transmitted on a teletext subtitle page which is associated with a language code, for example, ENG for English, in the teletext descriptor in the digital video broadcasting service information system known as DVB-SI. A subtitle page in this form is automatically displayed by a conventional DVB-compliant digital television receiver with OSD software, as long as the viewer has enabled teletext subtitling and selected the correct subtitling language (step s2).

To ensure that a viewer's attention is drawn to the additional available information, the instant access module 18 highlights the page number in the subtitle line, for example by causing the page number to flash or by displaying it in a different colour (step s3). In response to the display of the subtitle line containing the highlighted number, the viewer presses a selected key on the remote control unit (RCU) 10, for example an 'OK' key or the 'TEXT' key (step s4). On receiving this key, the instant access software 18 switches the viewing mode to teletext mode and selects the highlighted page number (step s5). The OSD software 17 then displays the selected page (step s6).

Referring to Figure 5, the instant access software 18 can be configured to differentiate subtitle lines containing page number references from ordinary subtitle lines which incidentally contain three digit numbers, by agreeing a coding scheme with the service provider. For example, the page number is tagged by the service provider prefixing it with a tag combination which would not normally be used (step s10). For example, a combination of [Flash] and [Steady] tags is used, where the [Flash] tag causes the text after it to flash and the [Steady] tag switches off the flash, in the format: [Flash][Steady]Page Number. The subtitle line with tagged page number is transmitted to the receiver 7 (step s11). The instant access software 18 scans through all incoming subtitle lines (step s12) looking for the [Flash][Steady] tag combination. If found, then assuming that teletext subtitling is enabled (step s13), the page number following the tag combination is highlighted and displayed as available for the viewer to accept (step s14). As described in relation to Figure 4, the viewer can accept the offer to view the page corresponding to the displayed page number by pressing a single key on his remote control unit, which triggers display of the corresponding page (steps s15 to s17).

The tag procedure permits enhanced functionality by allowing subtitle lines to be displayed even if the viewer has not enabled teletext subtitling or has selected a non-transmitted language. For example, on detecting a tag, the instant access software 18 overrides the viewer's preferences, as indicated in Figure 5 by the broken lines, sets subtitling mode (step s20) and language and displays a subtitle line with tagged page number (step s14).

The functionality described above with reference to Figures 4 and 5 can be implemented in hardware, software or a combination of hardware and software. A software implementation means that no changes need to be made to the STB hardware or to the tools used by service providers to create teletext pages and insert them into teletext data streams. In this case, the instant access software can be part of the system software in the STB 8 or it can be provided as downloadable application software.

Although the above description is based on the viewer activating the software using only a single entry on his remote control unit, it is envisaged that more than one keystroke is possible. One situation in which two keystrokes may be appropriate is to avoid accidental key presses on the remote control unit 10, in which case the viewer can be asked to press a second key in response to a screen message such as "Confirm? YES - press 1, NO - press 2".

It will be apparent to the person skilled in the art that any form of notification can be used to inform a viewer that there is additional information relating to a current television programme available on teletext. For example, there may simply be a text message stating that additional information is available, without a specific page number being given. Alternatively, an icon may appear, which the viewer has previously been informed represents the availability of further information.

While the invention has been specifically described in relation to teletext, it is applicable to any type of text based information service used in conjunction with a television system.

## Claims

1. Apparatus for accessing a text based information service from a television programme service, comprising:
means for providing link information for display during the television programme service, the link information being associated with predefined content of the text based information service;
means for receiving an acceptance signal that is independent of the predefined content from a display controller (10); and
means for providing the predefined content for display in response to the acceptance signal, **characterised in that**
the link information providing means is operable to override a predetermined display preference in response to detection of a code identifying the link information, wherein the predetermined display preference is a preference not to display the information service.

2. Apparatus according to claim 1, comprising means (18) for scanning data received from the television program service for link information.

3. Apparatus according to claim 1 or 2, wherein said link information providing means includes means for inserting the link information into a subtitle line.

4. Apparatus according to claim 3, further comprising means (18) for highlighting the link information.

5. Apparatus according to any preceding claim, comprising means (18) for distinguishing link information from information which does not comprise a link to the text based information service.

6. Apparatus according to claim 5, wherein said distinguishing means (18) comprises means for detecting a tag associated with the link information.

7. Apparatus according to claim 6, further comprising means configured to display the link information in response to the detection of a tag.

8. Apparatus according to any preceding claim, wherein the acceptance signal corresponds to a set of keystrokes on the display controller (10).

9. Apparatus according to claim 8, wherein the keystroke set comprises less than four keystrokes.

10. Apparatus according to claim 9, wherein the keystroke set comprises a single keystroke.

11. Apparatus according to any one of the preceding claims, wherein the text based information service comprises teletext.

12. Apparatus according to any one of the preceding claims, wherein the television programme service is broadcast in accordance with the digital video broadcasting (DVB) standard.

13. Apparatus according to claim 12, comprising means (16, 17, 18) for processing the DVB service.

14. Apparatus according to any preceding claim, comprising means (16, 17, 18) for processing the information service and the link information.

15. Apparatus according to any preceding claim comprising means (15) for storing the predefined content of the information service.

16. A method of accessing a text based information service from a television programme service via a television receiver, comprising the steps of:
providing link information associated with predefined content of the text based information service for display during the television programme service;
receiving an acceptance signal that is independent of the predefined content from a display controller (10); and
providing the predefined content for display in response to the acceptance signal, **characterised in that**
the step of providing link information includes overriding a predetermined display preference in response to detection of a code identifying the link information, wherein the predetermined display preference is a preference not to display the information service.

17. A method according to claim 16, including the step of scanning data received from the television program service for link information.

18. A method according to claim 16 or 17, including the step of providing the link information for display as a subtitle during the television programme service.

19. A method according to any one of claims 16 to 18, including the step of highlighting the link information to be displayed.

20. A method according to claim 19, wherein the highlighting comprises causing the link information to flash periodically when displayed.

21. A method according to any one of claims 16 to 20, wherein the link information comprises a page number.

22. A method according to any one of claims 16 to 21, wherein the link information includes an identification tag for distinguishing the link information from information which does not comprise a link to the text based information service.

23. A method according to claim 22, wherein the tag comprises a non-display character.

24. A method according to claim 22 or 23, comprising displaying a subtitle line which includes tagged link information.

25. A method according to any one of claims 16 to 24, wherein the acceptance signal corresponds to a set of keystrokes on the display controller.

26. A method according to claim 25, wherein the keystroke set comprises less than four keystrokes.

27. A method according to claim 26, wherein the keystroke set comprises a single keystroke.

28. A method according to any one of claims 16 to 27, wherein the television programme service is broadcast in accordance with the digital video broadcasting (DVB) standard.

29. A program to be executed by a processor to enable access to a text based information service from a television programme service, in which link information associated with selected predefined content of the text based information service is displayed concurrently with a television programme image, wherein the program, when executed by the processor, implements the steps of receiving an acceptance signal that is independent of the selected predefined content from a display controller (10), providing the link information for display and providing the selected predefined content for display in response to the acceptance signal and
**characterised in that** the step of providing the link information includes overriding a predetermined display preference in response to detection of a code identifying the link information, wherein the predetermined display preference is a preference not to display the information service.

30. A program including program code for performing the steps of any one of claims 16 to 28 when the program is run by a processor.

## Patentansprüche

1. Vorrichtung für Zugriff auf einen textbasierten Informationsdienst von einem Fernsehprogrammdienst aus, umfassend
- Mittel zum Bereitstellen von Verweisinformationen zur Anzeige während des Fernsehprogrammdienstes, wobei die Verweisinformationen einem vordefinierten Inhalt des textbasierten Informationsdienstes zugeordnet sind;
- Mittel zum Empfangen eines von dem vordefinierten Inhalt unabhängigen Annahmesignals von einer Anzeigesteuervorrichtung (10); und
- Mittel zum Bereitstellen des vordefinierten Inhalts zum Anzeigen in Antwort auf das Annahmesignal, **dadurch gekennzeichnet, dass**
- das Mittel, das die Verweisinformationen bereitstellt, betreibbar ist, um eine vorbestimmte Anzeigevoreinstellung in Antwort auf ein Erfassen eines die Verweisinformationen kennzeichnenden Codes außer Kraft zu setzen, wobei die vorbestimmte Anzeigevoreinstellung eine Voreinstellung ist, den Informationsdienst nicht anzuzeigen.

2. Vorrichtung gemäß Anspruch 1, die Mittel (18) zum Abtasten von Daten, die von dem Fernsehprogrammdienst empfangen werden, nach Verweisinformationen umfasst.

3. Vorrichtung gemäß Anspruch 1 oder 2, wobei das Mittel, das die Verweisinformationen bereitstellt, Mittel umfasst, um die Verweisinformationen in eine Untertitelzeile einzufügen.

4. Vorrichtung gemäß Anspruch 3, die ferner Mittel (18) zum Hervorheben der Verweisinformationen umfasst.

5. Vorrichtung gemäß irgendeinem vorstehenden Anspruch, die Mittel (18) umfasst, um Verweisinformationen von Information zu unterscheiden, die keinen Verweis zu dem textbasierten Informationsdienst umfassen.

6. Vorrichtung gemäß Anspruch 5, wobei das Unterscheidungsmittel (18) Mittel umfasst, um eine Markierung zu erfassen, die den Verweisinformationen zugeordnet ist.

7. Vorrichtung gemäß Anspruch 6, die ferner Mittel umfasst, die eingerichtet sind, die Verweisinformationen in Antwort auf das Erfassen einer Markierung anzuzeigen.

8. Vorrichtung gemäß irgendeinem vorstehenden Anspruch, wobei das Annabmesignal einem Satz an Tastendrücken auf der Anzeigesteuervorrichtung (10) entspricht.

9. Vorrichtung gemäß Anspruch 8, wobei der Tastendruck-Satz weniger als 4 Tastendrücke umfasst.

10. Vorrichtung gemäß Anspruch 9, wobei der Tastendruck-Satz einen einzelnen Tastendruck umfasst.

11. Vorrichtung gemäß irgendeinem der vorstehenden Ansprüche, wobei der textbasierte Informationsdienst Teletext umfasst.

12. Vorrichtung gemäß irgendeinem der vorstehenden Ansprüche, wobei der Fernsehprogrammdienst gemäß dem digitalen Videoübertragungsstandard (DVB) übertragen wird.

13. Vorrichtung gemäß Anspruch 12, die Mittel (16, 17, 18) zum Verarbeiten des DVB-Dienstes umfasst.

14. Vorrichtung gemäß irgendeinem vorstehenden Anspruch, die Mittel (16, 17, 18) zum Verarbeiten des Informationsdienstes und der Verweisinformationen umfasst.

15. Vorrichtung gemäß irgendeinem vorstehenden Anspruch, die Mittel (15) zum Speichern des vordefinierten Inhalts des Informationsdienstes umfasst.

16. Verfahren für Zugriff auf einen textbasierten Informationsdienst von einem Fernsehprogrammdienst via einen Fernsehempfänger aus, die Schritte umfassend:
- Bereitstellen von einem vordefinierten Inhalt des textbasierten Informationsdienstes zugeordneten Verweisinformationen zur Anzeige während des Fernsehprogrammdienstes;
- Empfangen eines von dem vordefinierten Inhalt unabhängigen Annahmesignals von einer Anzeigesteuervorrichtung (10); und
- Bereitstellen des vordefinierten Inhalts zur Anzeige in Antwort auf das Annahmesignal, **dadurch gekennzeichnet, dass**
- der Schritt an Bereitstellen von Verweisinformationen ein Außerkraftsetzen einer vorbestimmten Anzeigevoreinstellung in Antwort auf ein Erfassen eines die Verweisinformationen kennzeichnenden Codes umfasst, wobei die vorbestimmte Anzeigevoreinstellung eine Voreinstellung ist, den Informationsdienst nicht anzuzeigen.

17. Verfahren gemäß Anspruch 16, das den Schritt an Abtasten von Daten, die von dem Fernsehprogrammdienst empfangen werden, nach Verweisinformationen umfasst.

18. Verfahren gemäß Anspruch 16 oder 17, das den Schritt an Bereitstellen der Verweisinformationen zur Anzeige als ein Untertitel während des Fernsehprogrammdienstes umfasst.

19. Verfahren gemäß irgendeinem der Ansprüche 16 bis 18, das den Schritt an Hervorheben der anzuzeigenden Verweisinformationen umfasst.

20. Verfahren gemäß Anspruch 19, wobei das Hervorheben umfasst, dass veranlasst wird, dass die Verweisinformationen, wenn angezeigt, periodisch blinken.

21. Verfahren gemäß irgendeinem der Ansprüche 16 bis 20, wobei die Verweisinformationen eine Seitenzahl umfassen.

22. Verfahren gemäß irgendeinem der Ansprüche 16 bis 21, wobei die Verweisinformationen eine Identifikationsmarkierung umfassen, um die Verweisinformationen von Informationen zu unterscheiden, die keinen Verweis zu dem textbasierten Informationsdienst umfassen.

23. Verfahren gemäß Anspruch 22, wobei die Markierung ein nicht-anzuzeigendes Zeichen umfasst.

24. Verfahren gemäß Anspruch 22 oder 23, das ein Anzeigen einer Untertitelzeile umfasst, die markierte Verweisinformationen umfasst.

25. Verfahren gemäß irgendeinem der Ansprüche 16 bis 24, wobei das Annahmesignal einem Satz an Tastendrücken auf der Anzeigesteuervorrichtung entspricht.

26. Verfahren gemäß Anspruch 25, wobei der Tastendruck-Satz weniger als vier Tastendrücke umfasst.

27. Verfahren gemäß Anspruch 26, wobei der Tastendruck-Satz einen einzelnen Tastendruck umfasst.

28. Verfahren gemäß irgendeinem der Ansprüche 16 bis 27, wobei der Fernsehprogrammdienst gemäß dem digitalen Videoübertragungsstandard (DVB) übertragen wird.

29. Programm, das durch einen Prozessor auszuführen wird, um Zugriff auf einen textbasierten Informationsdienst von einem Fernsehprogrammdienst aus zu ermöglichen, in dem Verweisinformationen, die einem ausgewählten vordefinierten Inhalt des textbasierten Informationsdienstes zugeordnet sind, gleichzeitig mit einem Fernsehprogrammbild angezeigt werden, wobei das Programm, wenn durch den Prozessor ausgeführt, die Schritte von Empfangen eines von dem ausgewählten vordefinierten Inhalt unabhängigen Annahmesignals von einer Anzeigesteuervorrichtung (10), Bereitstellen der Verweisinformationen zur Anzeige und Bereitstellen des ausgewählten vordefinierten Inhalts zur Anzeige in Antwort auf das Annahmesignal umsetzt, und
**dadurch gekennzeichnet, dass** der Schritt an Bereitstellen der Verweisinformationen ein Außerkraftsctzen einer vorbestimmten Anzeigevoreinstellung in Antwort auf ein Erfassen eines die Verweisinformationen kennzeichnenden Codes umfasst, wobei die vorbestimmten Anzeigevoreinstellung eine Einstellung ist, den Informationsdienst nicht anzuzeigen.

30. Programm, das Programmcode zum Durchführen der Schritte von irgendeinem der Ansprüche 16 bis 28 umfasst, wenn das Programm durch einen Prozessor ausgeführt wird.

## Revendications

1. Appareil pour accéder à un service d'informations textuelles depuis un service de programme de télévision, comprenant :
des moyens pour fournir des informations de lien pour affichage durant le service de programme de télévision, les informations de lien étant associées à un contenu prédéfini du service d'informations textuelles ;
des moyens pour recevoir un signal d'acceptation qui est indépendant du contenu prédéfini depuis un contrôleur d'affichage (10) ; et
des moyens pour fournir le contenu prédéfini pour affichage en réponse au signal d'acceptation, **caractérisé en ce que**
les moyens de fourniture d'informations de lien sont opérationnels pour écraser une préférence d'affichage prédéterminée en réponse à la détection d'un code identifiant les informations de lien, dans lequel la préférence d'affichage prédéterminée est une préférence pour ne pas afficher le service d'informations.

2. Appareil selon la revendication 1, comprenant des moyens (18) pour analyser des données reçues depuis le service de programme de télévision pour rechercher des informations de lien.

3. Appareil selon la revendication 1 ou 2, dans lequel lesdits moyens de fourniture d'informations de lien comprennent des moyens pour insérer les informations de lien dans une ligne de sous-titre.

4. Appareil selon la revendication 3, comprenant en outre des moyens (18) pour mettre en évidence les informations de lien.

5. Appareil selon l'une quelconque des revendications précédentes, comprenant des moyens (18) pour distinguer les informations de lien des informations qui ne comprennent pas un lien vers le service d'informations textuelles.

6. Appareil selon la revendication 5, dans lequel lesdits moyens de distinction (18) comprennent des moyens pour détecter une balise associée aux informations de lien.

7. Appareil selon la revendication 6, comprenant en outre des moyens configurés pour afficher les informations de lien en réponse à la détection d'une balise.

8. Appareil selon l'une quelconque des revendications précédentes, dans lequel le signal d'acceptation correspond à une combinaison de touches de clavier sur le contrôleur d'affichage (10).

9. Appareil selon la revendication 8, dans lequel la combinaison de touches de clavier comprend moins de quatre touches de clavier.

10. Appareil selon la revendication 9, dans lequel la combinaison de touches de clavier comprend une seule touche de clavier.

11. Appareil selon l'une quelconque des revendications précédentes, dans lequel le service d'informations textuelles comprend le télétexte.

12. Appareil selon l'une quelconque des revendications précédentes, dans lequel le service de programme de télévision est diffusé conformément à la norme de radiodiffusion vidéonumérique (DVB).

13. Appareil selon la revendication 12, comprenant des moyens (16, 17, 18) pour traiter le service DVB.

14. Appareil selon l'une quelconque des revendications précédentes, comprenant des moyens (16, 17, 18) pour traiter le service d'informations et les informations de lien.

15. Appareil selon l'une quelconque des revendications précédentes comprenant des moyens (15) pour stocker le contenu prédéfini du service d'informations.

16. Procédé d'accès à un service d'informations textuelles depuis un service de programme de télévision par l'intermédiaire d'un téléviseur, comprenant les étapes consistant à :
fournir des informations de lien associées au contenu prédéfini du service d'informations textuelles pour affichage durant le service de programme de télévision ;
recevoir un signal d'acceptation qui soit indépendant du contenu prédéfini depuis un contrôleur d'affichage (10) ; et
fournir le contenu prédéfini pour affichage en réponse au signal d'acceptation, **caractérisé en ce que**
l'étape de fourniture d'informations de lien comprend l'écrasement d'une préférence d'affichage prédéterminée en réponse à la détection d'un code identifiant les informations de lien, dans lequel la préférence d'affichage prédéterminée est une préférence pour ne pas afficher le service d'informations.

17. Procédé selon la revendication 16, comprenant l'étape d'analyse des données reçues depuis le service de programme de télévision pour rechercher des informations de lien.

18. Procédé selon la revendication 16 ou 17, comprenant l'étape de fourniture des informations de lien pour affichage sous forme de sous-titre durant le service de programme de télévision.

19. Procédé selon l'une quelconque des revendications 16 à 18, comprenant l'étape de mise en évidence des informations de lien à afficher.

20. Procédé selon la revendication 19, dans lequel la mise en évidence comprend la conduite des informations de lien à clignoter périodiquement lorsqu'elles sont affichées.

21. Procédé selon l'une quelconque des revendications 16 à 20, dans lequel les informations de lien comprennent un numéro de page.

22. Procédé selon l'une quelconque des revendications 16 à 21, dans lequel les informations de lien comprennent une balise d'identification pour distinguer les informations de lien des informations qui ne comprennent pas un lien vers le service d'informations textuelles.

23. Procédé selon la revendication 22, dans lequel la balise comprend un caractère non affiché.

24. Procédé selon la revendication 22 ou 23, comprenant l'affichage d'une ligne de sous-titre qui comprend des informations de lien balisées.

25. Procédé selon l'une quelconque des revendications 16 à 24, dans lequel le signal d'acceptation correspond à une combinaison de touches de clavier sur le contrôleur d'affichage.

26. Procédé selon la revendication 25, dans lequel la combinaison de touches de clavier comprend moins de quatre touches de clavier.

27. Procédé selon la revendication 26, dans lequel la combinaison de touches de clavier comprend une seule touche de clavier.

28. procédé selon l'une quelconque des revendications 16 à 27, dans lequel le service de programme de télévision est diffusé conformément à la norme de radiodiffusion vidéonumérique (DVB).

29. Programme à exécuter par un processeur pour permettre l'accès à un service d'informations textuelles depuis un service de programme de télévision, dans lequel des informations de lien associées à un contenu prédéfini sélectionné du service d'informations textuelles sont affichées en même temps qu'une image de programme de télévision, dans lequel le programme, lorsqu'il est exécuté par le processeur, met en oeuvre les étapes de réception d'un signal d'acceptation qui est indépendant du contenu prédéfini sélectionné depuis un contrôleur d'affichage (10), fournissant les informations de lien pour affichage et fournissant le contenu prédéfini sélectionné pour affichage en réponse au signal d'acceptation et **caractérisé en ce que** l'étape de fourniture des informations de lien comprend l'écrasement d'une préférence d'affichage prédéterminée en réponse à la détection d'un code identifiant les informations de lien, dans lequel la préférence d'affichage prédéterminée est une préférence pour ne pas afficher le service d'informations.

30. Programme comprenant un code de programme pour exécuter les étapes de l'une quelconque des revendications 16 à 28 lorsque le programme est exécuté par un processeur.
